# EUROPEAN PATENT APPLICATION

(11) **EP 4 465 167 A1**
(43) Date of publication of application: **20.11.2024**
(21) Application number: 23173406.2
(22) Date of filing: 15.05.2023
(51) Int. Cl.: G06F 8/41, G06F 8/51

(54) **A COMPUTER-IMPLEMENTED METHOD AND A COMPUTER-READABLE MEDIUM**

(71) Applicant: ILNumerics GmbH, 12103 Berlin (DE)
(72) Inventor: KUTSCHBACH, Haymo, 22305 Hamburg (DE)
(74) Representative: Zimmermann & Partner Patentanwälte mbB

(57) **Abstract**

A computer-implemented method includes: receiving (I) a primary program code (UC) with a sequence of array instructions each configured to receive as input an array data structure (A, B, C, D, E, F, G) capable to store multiple elements of a respective common data type; and generating (II), from the primary program code (UC), a secondary program code (TCC) executable on a processing unit (PU, CPU, GPU) comprising several sub-units (core#1-core#4). The secondary program code comprising program segments (S1, S2, S3, S4, S5) each comprising a respective array operation, the array operations corresponding to the array instructions. Each of the program segments being configured to receive, as a respective runtime input, a partially configured runtime instance (A1, B1, C1) of a respective array data structure, and to consider information from the respective partially configured runtime instance, to partially configure a runtime instance (B1, C1, C2) of an array data structure (B, C) as runtime output of the respective program segment, and at least partially configure a respective executable code (KC) comprising the respective array operation. The executable code being configured to update a configuration of the runtime instance partially configured as runtime output of the respective program segment. The method further includes starting (III) executing the secondary program code on a first sub-unit (core#1) of the processing unit, and, when a configuration of the runtime instance, which was received as respective runtime input, is complete and/or updated, completing (IV) configuration of the respective executable code, when the respective executable code is only partially configured, and executing (V) the respective executable code on the processing unit.

## Description

### TECHNICAL FIELD

Embodiments of the present invention relate to computer-implemented methods, in particular to computer-implemented methods for executing array instructions on a processing unit comprising several sub-units, and a corresponding computer-readable medium.

### BACKGROUND

High demand exists for efficient utilization of computing resources, in particular in the field of numerics and/or for data analysis. This involves the task of parallelizing array instructions which is often tedious, cost intensive and requires significant knowledge of low-level computer architectures and programming technologies related thereto. Modern computers may expose a heterogeneous architecture, as a hierarchy of multiple processing units with varying parallel processing capabilities. For example, a CPU may offer multiple, individual cores, each offering parallel (single instruction, multiple data, SIMD) vector extensions for processing multiple scalar data at the same time. Further, graphic processors and other processing devices are commonly available in many popular computer setups today.

In order to minimize a program's execution time and/or energy consumption for obtaining a certain result, the workload processed by a program is to be efficiently distributed onto the parallel processing resources. One challenge for auto-parallelizing compilers is to identify independent parts of a program's workload so that they can be processed most efficiently by the parallel processing resources during runtime.

As described in WO 2018/197695 A1, the program segments may be derived from array instructions of a user generated program code written by means of a subset of a common array-based language such as subsets of ILNumerics, Matlab^{®} and NumPy, respectively. The segments often replace the original array instructions in the user program. Executing segments asynchronously can be helpful to hide the latencies of memory copies between individual processing units of a heterogeneous computing system. Hence, a variety of workloads may be handled efficiently both with small as well as with large data. However, to execute the program segments on a processing unit (PU) with multiple subunits requires more careful resource management for both: memory and thread utilization. To always execute the segments asynchronously often leads to increased execution times and increased power consumption, respectively, due to - among others - increased latency for handling additional hardware resources involved.

Further, to always manage resource utilization for segments from the host subunit / from the main thread often causes high memory utilization due to inefficient allocation schemes, limiting the number of segments which can be considered at the same time. Respectively, at least some of the potential of parallel execution of subsequent segments has not yet been fully identified and exploited. Furthermore, any non-supported array instruction within the primary program code, in particular instructions comprising conditional expressions, leads to interruptions in the segment chain and forces sequential (synchronous) execution on the host/ the main thread, resulting in decreased utilization efficiency for compute resources.

Therefore, there is a need to further improve the typically compiler-based automatic adaptation and execution of user software programs referring to array instructions.

### SUMMARY

According to an embodiment of a computer-implemented method, the method includes receiving a primary program code comprising a sequence of array instructions, each of the array instructions being configured to receive as input an array data structure capable to store multiple elements of a respective common data type. A secondary program code executable on a processing unit comprising several sub-units is generated from the primary program code. The secondary program code comprising program segments each comprising a respective array operation, the array operations corresponding to the array instructions. Each of the (generated) program segments being configured to receive, as a respective runtime input, an (at least) partially configured runtime instance of a respective array data structure. Further, each of the program segments being configured to consider information from the respective partially configured runtime instance to partially configure a runtime instance of an array data structure as runtime output of the respective program segment, and to at least partially configure a respective executable code comprising the respective array operation. The executable code being configured to update a configuration of the runtime instance which was/has been partially configured as runtime output of the respective program segment. Executing the secondary program code on a first sub-unit of the processing unit is started. When a configuration of the runtime instance, which was received as respective runtime input, is complete and/or updated, configuration of the respective executable code is completed, when the respective executable code is only partially configured, and the respective executable code is executed on the processing unit.

Accordingly, automated (i.e., at most with minor, typically without any manual adaptation) efficient parallel execution of array-based user programs can be achieved without taxing execution performance, even for small workloads. In particular, the full parallel potential within array algorithms of the user program may be automatically identified and parallelizable workloads be automatically distributed onto the sub-units. Further, undesired latencies incurred by incomplete data-dependencies can often be decreased, hidden, or avoided.

This may be achieved because the program segments, in the following also referred to as segments for short, can be executed synchronously and asynchronously depending on the runtime input(s) and the configuration of the runtime instance which was received as respective runtime input (also referred to as configuration of the runtime input(s) for short), respectively. More particular, at the beginning/start of the execution, each segment, in particular the first segment, may inspect their respective runtime input(s), and executes the kernel code asynchronously when the runtime input(s) are completely configured (configuration is complete(d) / updated). Otherwise, (configuration is incomplete, not all input parameters are 'ready' yet), the kernel is executed by the (earlier) segment, having completed a configuration information of the runtime instance as its output. In particular, the runtime kernel of the first segment is executed by the segment, updating the configuration of the last partially configured input parameter of the first segment becoming updated and, even more particular, the execution of the respective runtime kernel of the first segment is performed synchronously by the subunit used by the earlier segment's runtime kernel to complete the output runtime instance element values configuration information. Accordingly, the method can execute segments on multiple subunits according to actual data dependency relations and state. The overhead or latency introduced by scheduling and assigning runtime kernels to subunits or threads and by switching thread context is prevented from. Independent workload is executed concurrently while keeping the number of active threads low.

Please note that a runtime instance(s) may be an output of one segment and an input for another segment (or even other segments). Accordingly, output and input array data structures can define data dependencies between segments. Thus, a runtime instance used as output and as input to segments fulfills a data dependency for each individual invocation of the segments and can be used to represent and/or to inform about the state of the dependency individually for each invocation and/or for each programmatic use of the segments.

The information from the respective partially configured runtime instance and/or the configuration of the respective runtime instance may in particular refer to and/or include a size information, a memory reference, and/or element values. Accordingly, each information can be individually updated, in particular at different times and by individual executable code(s), even more particular on different subunits.

Furthermore, the information from the respective partially configured runtime instance and/or the configuration of the respective runtime instance may further include a storage location information, a storage layout information, and / or an element type information.

Accordingly, the runtime input(s) may only be partially configured (configuration is incomplete), when at least one of the size information, the memory reference, the storage layout, the element values, the storage location and the element type information of the partially configured runtime instance is undefined, uninitialized or missing.

The configuration of the runtime instance as runtime output may be updated, completed and/or defined by the primary program code, by the secondary program code, and/or in particular by the executable code. Accordingly, the secondary program code gains great freedom to automatically decide (at runtime and during execution of the program segments) for the best execution strategy, typically for the strategy promising the best ratio between resource management overhead and execution performance improvement, in particular promising fastest execution times and/or lowest power consumption by efficiently using as many parallel computing resources as possible.

Likewise, the respective part of the configuration of a runtime instance as output may be updated or defined by individual invocations of the executable code and/or the individual invocations may execute individual parts of the executable code, for example on a respective (distinct) sub-unit. Accordingly, important configuration information of data is split into more fine-grained informational parts which can be individually distributed to and received by later segments to base further execution decisions upon without having to wait until the data (runtime instances of array data structures) is fully configured.

Typically, the configuration of the respective executable code is completed and/or the respective executable code is executed on the processing unit when the respective configuration of the respective partially configured runtime instance is updated, typically immediately after the configuration of the respective partially configured runtime instance is updated, in particular when at least one of, typically all of previously undefined, uninitialized or missing desired configuration information is updated, more particular when at least one of the respective size information, the respective memory reference, the respective storage layout, and the respective element values is updated, and even more particular when at least one of the respective size information, the respective memory reference, the respective storage layout is updated. Accordingly, the resulting executable code is optimized for the specific configuration properties of the runtime instance when the respective information becomes available.

The sub-units may at least be functionally identical; have access to a (common) shared memory for the processing unit. Accordingly, by considering a single processing unit costs, associated with preparing / copying data between the memories of multiple computing devices / processing units can be disregarded. Further, this disclosuresupports and improves such method parts for (auto-)parallelizing array-based algorithms for processing on heterogeneous computing resources after selecting the processing unit (see, for example: WO 2018/197 695 A1).

Furthermore, the processing unit may be a multicore or manycore CPU or a CPU with a GPU or similar processor.

Even further, the respective sub-unit may be or may be accessed or controlled by or corresponds to a kernel or user thread, a managed thread, a task, a fibre, or a process.

The executable code (of a respective segment) typically serves a similar intent as the set of (sequential) implementations of corresponding array instructions. While the main intent is to completely configure the runtime instance(s) as output to a segment the actual implementation being executed according to this method is often optimized to multiple regards, for example for efficient low-level hardware resource utilization, for efficient use of memory, in particular for eliminating temporary results, and for thread-safe execution. Further, the executable code is often split into multiple parts, each part often configuring individual information of the runtime instance configuration and each part being individually executable. The executable code has a runtime (compute) kernel which is executable on at least one, typically on each of the typically (at least functionally) identical several sub-units. Accordingly, any part of a segment, in particular of the executable code is executable on any subunit. Configuration of runtime instances can be updated on any subunit /thread without having to use /return processing to the main thread for updating specific parts of the configuration.

Typically, the runtime kernel (of the respective segment) is configured for using the array operation(s) and the runtime instance as input to calculate, update and/or define the element values stored into the memory referenced by the runtime instance as output. Sometimes, nested loops are used within a kernel to calculate the element values in all dimensions of the array result, often using multiple array operations.

Since a runtime kernel corresponds to a program segment, runtime kernels are in the following also referred to as segment kernels (and kernels for short). Note that runtime kernels as described herein may, in some embodiments, be derived from the respective program segment similar as described in WO 2018/197 695 A1 for deriving the runtime kernels in the runtime segments from respective program segments.

Completing the configuration of the executable code may include at least one of, typically several or even all of:
- generating a hash of the executable code;
- storing or caching the executable code on a persistent storage (e.g. a file system or NAS);
- loading and/or re-using the stored version of the executable code;
- at least partially generating the runtime kernel;
- finishing the runtime kernel;
- optimizing the runtime kernel code for the size, the storage location and / or the storage layout information of the at least one runtime instance as input, for properties of the execution framework and / or for properties of the processing unit, typically for specific (low-level) instructions (e.g. SIMD or vector register operations) and / or memory properties of the processing unit, for example memory cache properties;
- configuring the runtime kernel for receiving and/or accessing at least part of the runtime instance as input and/or at least part of the runtime instance as output; and
- configuring the runtime kernel for being executed on the processing unit when the element values of the at least one, typically of all runtime instances as input become completely configured.

Alternatively or in addition, completing the configuration of the executable code may include defining executable instructions or code expressions to be executed on the subunit and performing at least one of updating or defining at least a part of the configuration, typically at least a size information of the runtime instance as output, and/or updating or defining at least respective information of the runtime instance as output, when the corresponding information was updated or defined for the runtime instances as input (at least one, typically for all runtime instances as input), allocating memory on the processing unit, and updating or defining the memory reference on a runtime instance as output.

The code expressions (CE) are typically configured to be executed on the respective subunit used for executing the executable code causing respective information for the runtime instance as input to the respective segment to become defined or updated. Accordingly, executable code, in particular code expressions and runtime kernels are executed on a subunit other than the main subunit / the main thread and without delaying processing of (later) segments on the main subunit / thread. Often the processing of executable code is also improved (made faster) by avoiding additional overhead for switching subunits / threads within the sequence of segments having a data dependency on each other.

Alternatively or in addition, completing the configuration of the executable code may include or be followed by executing the code expressions on the first subunit if an information, in particular a size information, of the runtime instance(s) as input to the respective segment, typically of all runtime instances, is defined and configured and is available to the executable code at this time.

Alternatively or in addition, completing the configuration of the executable code may include or be followed by starting execution of the runtime kernel on a further subunit of the processing unit if (all) the runtime instance(s) as input to the respective segment are completely configured and available to the runtime kernel at this time. Accordingly, the typically high workload of computing element values / executing the runtime kernel is delegated to a further subunit without delaying processing of further /later segments by the main subunit / the main thread.

Generating the secondary program code may include inspecting and/or analyzing the primary program code or code derived thereof to extract data flow information and/or to analyze data dependencies.

Depending thereon, at least one of the segments may be chained to an earlier segment in the sequence of generated segments and may receive at least one respective output array data structure of the earlier segment as input array data structure.

Further, configuring of the executable code of a second segment in the segment chain may include configuring a runtime instance as respective input to the second segment in a way that changes to or updates of at least one part of its configuration, typically at least of a size and / or of a part comprising element values, cause the executable code of the second segment of the segment chain to start synchronously executing, in particular on the same sub unit, fibre or thread as used by the code causing the change or the update to the configuration of the runtime instance as input, typically by the respective first segment's executable code, if the output of the first segment is not used by other segments and all other input array data structures to the second segment are already completely prepared. Accordingly, subunits / threads are 'reused' by continuing processing of further, dependent segments code and without requiring to allocate or assign new subunits / threads for their processing.

The workload of an array instruction or a sequence of array instructions is understood as the sum of the elementary instructions required to transform the input array data in accordance with the array instruction(s), in particular a sequence or set of array instructions into the desired result. Note that some array instructions can expose different characteristics regarding instruction workload and/or workload for computing a single element, when compared to other array instructions and/or when processed on different processing units.

In particular, the array instruction may include respective meta information, in the following also referred to as AIMI for short, allowing for determining a configuration information of an output of the array instruction for a configuration information of the respective input array data structure(s).

Typically, a compiler uses the AIMI to derive and/or generate executable code (byte code, machine code, code defined in the host language of the secondary program code, subject of JIT compilation, or similar), sometimes using lookup-tables according to the array instructions found. Often, the compiler includes instructions or rules on how to utilize or access the structure of runtime instances, to locate specific (size or other) information within the respective runtime instance storage, such that, when the resulting code is executed, the desired configuration information is read from / stored into the runtime instance. The compiler may also consider individual array instruction kinds as having one or multiple array data structures runtime instances as input and / or generating one or multiple array data structure (runtime instances) as output. Further, the compiler typically combines or merges input configuration information, output storage information, and AIMI calculation rules for output configuration information, in particular for calculating an output size information for all array operations included into a segment. Often, the resulting code is added to a segment in form of code expressions to be called at runtime.

Typically, the configuration information of an output of the array instruction includes a size information of the output of the array instruction for the configuration information of the input array data structure(s), in particular for a size configuration information of the input array data structure(s).

Furthermore, the AIMI may include information about further input data required to determine the configuration information of the output of the array instruction, in particular a source of the further input data.

Furthermore, the information about the further input data may include or refer to an output of the respective array instruction / of the segment and / or may be used as input to the AIMI, as reference to an input to the AIMI, and/or as input to the code expressions (CE). Accordingly, the set of supported array instructions / array instruction kinds includes such array instructions, where a configuration information, in particular the size of an output depends on a configuration information produced in other parts of the executable code, in particular depends on the values of elements of at least one input array data structure / runtime instance and/or a size information of a runtime instance as output to the runtime kernel (RK). Therefore, interruptions in the sequence of segments in the secondary program code due to a lack of support for certain array instructions are mostly avoided, more segments / array instructions can be considered at once and more parallel potential of the algorithm be exploited and used for parallel execution. As a result, array instruction level parallelism (AILP) may be realized or improved.

Executing the secondary program code (TCC) may include using the AIMI of the array instruction(s) corresponding to the array operation(s) of the segment, the array operation(s) of the segment, the configuration information, in particular the size information of the respective runtime instance, the runtime instance(s) of the respective array data structure(s) and/or the information about the further input data as input to at least partially configure the executable instructions and/or the code expressions to receive respective information and/or to determine and/or update the configuration information, in particular the size information of the respective runtime instance as output of the segment.

Typically, the AIMI includes, refers to, receives and/or determines a size information, an element type information, and/or a layout information for the respective array instruction. The size information typically includes at least one of a number of dimensions of the respective runtime instance, a length of at least one of the dimensions of the respective runtime instance, a location information of the respective runtime instance, and a stride information of at least one of the dimensions of the respective runtime instance.

The term "array instruction meta information" (AIMI) as used herein intends to describe a data structure or functional data structure, able to programmatically inform about the output size, shape and potentially other properties of an output of a single array instruction given the respective information about the (at least one) input of the array instruction. Typically, for this method to work, each array instruction associates a respective (individual) AIMI, for example a (code) attribute (see: C# Attribute class). Alternatively, in another example implementation each array instruction associates a class of predefined AIMI or a compiler matches known array instructions or known classes of array instructions with predefined AIMI.

To partially configure the runtime instance of an array data structure as runtime output of the respective program segment may include allocating and/or instantiating a respective runtime instance. Accordingly, the runtime instance may serve as output runtime instance of the segment. Further, a reference to the instance is provided to other segments and be used for subsequent updates performed to the runtime instance by the executable code of the segment, enabling (asynchronous) updates to its configuration and/ or to inform further segments about the update.

Furthermore, a respective runtime output size information of the runtime instance as output of the respective program segment may be determined, typically using the AIMI and a runtime size information of the runtime input of the respective program segment (if the runtime output size is not yet defined and is not to be determined otherwise or later, e.g. by a different segment). Sometimes, multiple AIMI are merged or chained into a sequence of individual AIMI, in particular, if the segment comprises multiple array operations.

The runtime size information may include at least one of a number of dimensions of the respective runtime instance, a length of at least one of the dimensions of the respective runtime instance, a data type of the elements of the respective runtime instance, a location information of the respective runtime instance, and a stride information of at least one of the dimensions of the respective runtime instance.

Likewise, memory may be allocated for configuring the memory reference configuration information and/or for storing the element values of the respective runtime output of the respective program segment (if not yet allocated and is not to be allocated otherwise or later).

The primary program code is typically a user code written in an array-based programming language, for example a domain specific language such as ILNumerics language and/or embedded in a host language such a C#, Python, Java, FORTRAN or Visual Basic. Alternatively, the primary program code may be written in a scripting language, a numerical language, or a scientific language. Examples of array instructions include sin(A) for calculating the sine for all elements of array A, find(A) for locating the sequential element indices of any non-zero element values in A, fft(A) for calculating the fast Fourier transform of A, matmul(A,B) for calculating the matrix multiplication of matrices A and B of matching size, sum(A) for reducing a dimension of A, and A[B < 1] for accessing element values of A at (sequential) locations where array B's element values have a value lower than 1.

Note that array-based program algorithms are popular in the scientific community and many industrial branches. Two popular array-based programming languages today are Matlab (by Mathworks Inc.) and numpy (based on the python language). Another example is the ILNumerics language, available for the .NET platform.

In contrast to general algorithms, which use scalar data of various types as elementary item in their instructions, array-based languages use input array data structures as elementary data items. Arrays typically expose a rectilinear structure. Elements of arrays may be arranged along an arbitrary number of dimensions and are typically all the same type, typically a numerical data type, for example the 'double' or the 'int' data type in the C programming language.

A matrix is one typical example of an array, having 2 dimensions. A set of equally sized matrices can be stored as a 3-dimensional array. The term 'tensor' refers to an abstract mathematical structure of similar, n-dimensional shape. An n-dimensional array can be understood as a tensor, being stored on a computer storage. Due to the storage requirement and since for such storage commonly 1-dimensional computer memory is used, additional information is desired in order to fully represent an array - compared to a tensor: the storage layout, sometimes also referred to as `strides', describes how individual elements of an array are accessed by means of a 1-dimensional memory storage.

The term `stride' as used herein intends to refer to the information about the storage layout of a multi-dimensional array. Typically, strides are stored with the array, commonly in a header part of the (input / output) array data structure. The stride value for a dimension commonly specifies a storage distance or memory address distance for elements stored within that dimension. Stride values are often unitless, with a scaling factor of the storage size for a single element of the array element type or 1 for byte distances.

Note, that the set of potential array shapes also comprise vector shaped arrays, where the vector may extend along an arbitrary dimension of the array, often along the first or the last dimension. Some languages allow scalar data (0-dimensional array), storing only a single element. Some languages define a minimum number of dimensions for an array and store scalar data as matrices or arrays of at least that minimum number of dimensions, where all dimensions are 'singleton dimensions', having the length of 1. N-dimensional arrays may have zero elements if N is greater than 0 and at least one of its dimensions has 0 elements. If N is 0, typically and by convention, the array is scalar, i.e.: it stores exactly one element.

Further, the program segments may be generated as host language code or as an intermediate representation, in particular a byte code representation, often representing abstract, intermediate machine instructions (for example .NET, ECMA CLI intermediate language code or JAVA byte code) or native, architecture specific machine instructions, as for example X87 or ARM instructions. For example, the secondary program code may be compiled by a compiler, in particular a just in time (JIT) - compiler, and the executable code and / or the runtime kernel may be generated using the same or another (JIT-) compiler, respectively.

However, the secondary program code is typically also generated using a transpiler, in particular a source-to-source translator converting program code between programming languages that operate at (approximately) the same level of abstraction, for example between the same level of abstraction and the same language (e.g. C# -> C#), respectively.

More particular, the sequence of array instructions may be replaced by a sequence of program segments using a transpiler. Accordingly, local optimizations can be applied to areas of the primary program code comprising array instructions without the need for analyzing the whole primary program code.

Each program segment typically includes a respective array operation corresponding to an array instruction. However, a program segment may also include multiple array operations, each array operation typically corresponding to one of the array instructions. Accordingly, by merging multiple array operations into one segment runtime, overhead due to creating, storing and reading intermediate results (often called: 'temporaries') of individual array operations is removed or at least decreased.

For each program segment, a typically device-specific runtime kernel (RK) and code expressions (CE), respectively implementing the respective array operation(s) for calculating the element values and the size configuration information of the runtime instance as output to the segment may be generated (using a complier).

Device-specific runtime kernels may be compiled based on the received or determined hardware information and / or based on the configuration information of the runtime instance as input.

The hardware information may include at least one of a type of the processing unit, a number and/or a type of computational subunit(s) of the processing unit, properties of a subunit, such as length of SIMD processing units, size of available cache storage, length of cache lines, a number and type of similar or equal instructions to be executed together, and hardware support for specific instructions.

The program flow of the primary program code may at least substantially be maintained by/in the secondary program code. Accordingly, local optimizations due to segments in the secondary program code do not alter the semantics of the original algorithms.

Generating the secondary program code typically includes analyzing the primary and/or (a current stage of the) secondary program code, in particular the sequence of program segments (as generated by the transpiler).

Further, data dependencies existing between array instructions determined by the primary program code or between array operations determined for the secondary program code may be used for generating the secondary program code.

In particular, a dependency graph for at least some of the array instructions and the array operations, respectively may be determined from the respective program code. Accordingly, the secondary program code can be adjusted to better match the context of individual array instructions, including decisions about hardware resource allocation, in particular about synchronous or asynchronous execution of a segment, preventing from unnecessary overhead in situations where the program lacks parallel potential and leading to faster execution times / to lower power consumption.

Furthermore, generating the secondary program code may include creating and configuring a respective program segment for synchronous execution, if, based on the dependency graph the respective program segment would not profit from parallel execution, in particular if the dependency graph containing the array instructions corresponding to the array operations in the respective program segment comprises exactly one branch, and wherein executing the respective program segment synchronously includes executing the executable code, in particular the runtime kernel on the first sub-unit (core#1), in particular by the first thread and during or after completing the configuration of the executable code.

Even further, generating the secondary program code may include at least one of: including the array instructions as corresponding array operations into the respective program segment; including the AIMI into the respective program segment; including a set of array instructions from the sequence of array instructions into the respective program segment as corresponding array operations; including a reduction array instruction as a reduction array operation; including an unary array instruction as an unary array operation; including an array access instruction as an array access operation; and including a binary array instruction as a binary array operation into the first program segment (see also the application PCT/EP2022/069161, which is hereby incorporated by reference in its entirety).

Accordingly, independent workload may be particularly well distributed, and/or multiple subunits of the processing unit (PU) efficiently utilized, in particular in a way resulting in a particularly low execution time and/or a particularly low energy consumption.

According to embodiments, a computer program product and a (none-volatile) computer-readable medium, respectively, includes instructions which, when executed by a computer, cause the computer to carry out any of the steps and methods explained herein.

### BRIEF DESCRIPTION OF THE DRAWINGS

The components in the figures are not necessarily to scale, instead emphasis is placed upon illustrating the principles of the invention. Moreover, in the figures, like reference numerals designate corresponding parts. In the drawings:
Figure 1A illustrates a computer-implemented method according to an embodiment;
Figure 1B and figure 2A illustrates a computer-implemented method according to embodiments;
Figure 2B illustrates an exemplary computing system for which the method shown in Fig. 1A may be used;
Figure 3A and figure 3B illustrates a computer-implemented method according to embodiments;
Figure 4 illustrates a computer-implemented method according to embodiments; and,
Figure 5 illustrates a computer-implemented method according to embodiments.

### DETAILED DESCRIPTION

In the following Detailed Description, reference is made to the accompanying drawings, which form a part hereof, and in which are shown by way of illustration specific embodiments in which the invention may be practiced. In this regard, directional terminology, such as "top", "bottom", "front", "back", "leading", "trailing", "next", etc., is used with reference to the orientation of the Figure(s) being described. Because components of embodiments can be positioned in a number of different orientations, the directional terminology is used for purposes of illustration and is in no way limiting. It is to be understood that other embodiments may be utilized, and structural or logical changes may be made without departing from the scope of the present invention. The following detailed description, therefore, is not to be taken in a limiting sense, and the scope of the present invention is defined by the appended claims.

Reference will now be made in detail to various embodiments, one or more examples of which are illustrated in the figures. Each example is provided by way of explanation and is not meant as a limitation of the invention. For example, features illustrated or described as part of one embodiment can be used on or in conjunction with other embodiments to yield yet a further embodiment. It is intended that the present invention includes such modifications and variations. The examples are described using specific language which should not be construed as limiting the scope of the appending claims. The drawings are not scaled and are for illustrative purposes only. For clarity, the same elements or manufacturing steps have been designated by the same references in the different drawings if not stated otherwise.

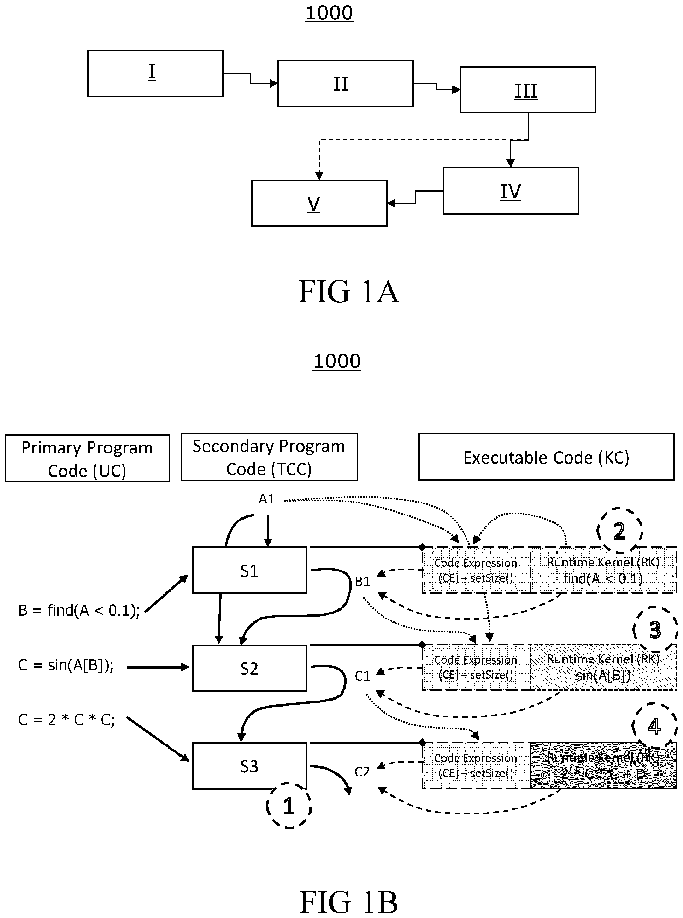

With regard to Figures 1A, 1B method steps of a computer-implemented method 1000 are explained.

In a block I of the shown flow chart with blocks I-V each of which may correspond to one or more processes or steps, a primary program code (UC in Fig. 1B) with a sequence of array instructions as shown in Fig. 1B is received. Each of the array instructions (find(), sin(), multiplication *, lower than <, array access []) is configured to receive as input an array data structure A, B, C capable to store multiple elements of a respective common data type. For example, array data structure A may represent a medical image such as an X-ray image, stock market information or measurement data.

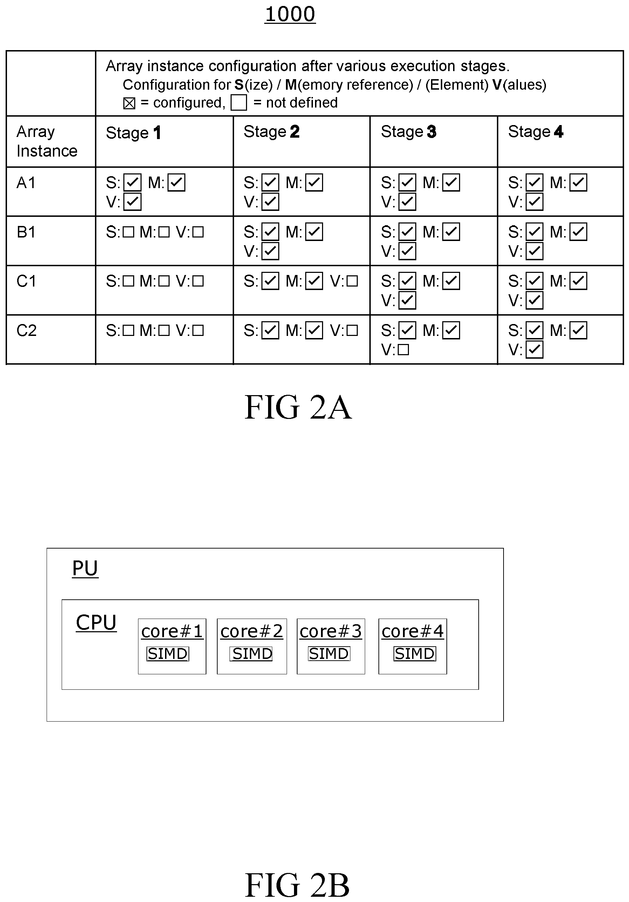

In a subsequent block II, a secondary program code (TCC, in Fig. 1B) executable on a processing unit comprising several sub-units, for example the processing unit as shown in Fig. 2B, is generated from the primary program code, in particular a primary user code UC.

Figure 2B shows an example computing system with a processing unit PU. In the exemplary embodiment, PU represents the computational resources of a computing system, like the one, often found in a desktop computer, laptop or computing node of a computing grid or cloud system. In the exemplary embodiment, the shown PU includes respective sub-units, i.e. a CPU with exemplary four cores as sub-units (core#1-core#4).

In the following, the method is mainly explained with regard to execution on the cores #1 to #4 of the CPU. However, this is not to be considered as limiting, as the method can also be applied analogously to the cores of a GPU or any other processing unit with several sub-units.

The secondary program code TCC of method 1000, as generated in block II of Fig. 1A, includes three segments S1-S3 each having respective array operations, each array operation corresponds to one array instruction of the primary program code UC.

Each of the three exemplary program segments S1, S2, S3, which may be a part, in particular a first part of a longer sequence of segments, is configured to receive, as a respective runtime input, a runtime instance A1, B1, C1 of the array data structure A, B, C. Each of the respective runtime instances A1, B1, C1 may be partially configured or completely configured, depending on the state of the PU at runtime and during execution of the program segments S1, S2, S3.

Further, each of the three exemplary program segments S1, S2, S3 is configured to evaluate and consider information from the respective partially configured runtime instance A1, B1, C1 to partially configure a runtime instance B1, C1, C2 of respective array data structure B, C as runtime output of the respective program segment S1, S2, S3, and at least partially configure a respective executable code (KC in Fig. 1B) implementing the respective array operation, wherein the executable code KC is configured to update, during runtime, a configuration of the runtime instance B1, C1, C2 which was partially configured as runtime output of the respective program segment S1, S2, S3.

In a subsequent block III, executing the secondary program code TCC, more particularly executing its first segment S1 is started on the first sub-unit core#1 of the processing unit (CPU in Fig. 2B).

When a configuration of the runtime instance A1 (later B1, C1), which was received as respective runtime input, is complete and/or updated, configuration of the respective executable code KC is completed in block IV, when the respective executable code KC is only partially configured, otherwise block IV is skipped, as indicated by the dashed arrow in Fig. 1A.

Thereafter, the respective executable code KC may be executed on the processing unit, e.g. on the first sub-unit core#1, in a block V. However, this may depend on the configuration of the runtime instances, as explained in the following in more detail.

Figure 1B illustrates an exemplary executing situation with partial configuration of the corresponding runtime instances of array data structures.

The exemplary primary program code, here consisting out of 3 lines of ILNumerics code (no element type declarations for brevity). A, B, C are 3 non-scalar arrays. Let's say: A1 - the instance of A - has 3 dimensions, with a length of 100 double precision, floating point elements each.

In the exemplary embodiment, three segments S1-S3 are created, as already explained above, wherein, here, each line of UC results into one segment.

On entering program segment S1, A is already (completely) configured. This means that its size, element type, location, storage order, memory reference (for example: buffer pointer or memory address) and element values are fully defined (exemplary assumption). Segment S1 is now executed on thread core#1. It creates the runtime kernel, optimizes (specializes) the kernel for executing the array operations `find(A < 0.1)' under consideration of the properties of the processing unit (PU) and A1. The kernel is typically stored into a cache or similar storage for later, fast reusing.

Further, segment S1 creates and/or configures code expressions (CEs) under consideration of the array operations, the runtime instances A1 and the properties of the processing unit (CPU or GPU). Because the array operations `find(A < 0.1)' result in an output array whose size depends on the values of A and the output of the array operations, the segment's TCC is configured to consider the result of executing the array operations (the runtime kernel RK) for configuring the code expressions.

As illustrated in figure 1B, the executable code KC of the segments may consist or at least include a respective runtime kernel RK and a respective (corresponding) code expression CE.

The code expression for segment S1 is configured by the TCC to react to changes to the configuration of the input array instance A1 of the segment / of the runtime kernel. Here, we describe an implementation maintaining the size, the memory reference, and the element values of output array(s). The element values of the output of segment 1, B1, are calculated by the runtime kernel when all input array instances are completely configured. The code expressions are executed and the size of the output array is calculated after, typically upon all input array instances are completely (fully) configured and when the runtime kernel has finished execution.

Typically, output runtime instances as results to segments are configured for multiple segments in parallel, i.e.: at the same time and on multiple subunits. This is mostly true for the calculation of result instance(s) element values. It may also be true for other (partial) configuration information, for example a size configuration information. However, for this example the size information is relatively simple to calculate. Hence, size calculation is performed synchronously - typically by the same subunit / thread recognizing the completeness of and/or completing the size information for all / for the last input array runtime instance/s to a segment. Note, that such calculation may still be performed in parallel to the main thread / to the subunit processing or having processed the TCC, even though sizes are calculated synchronously.

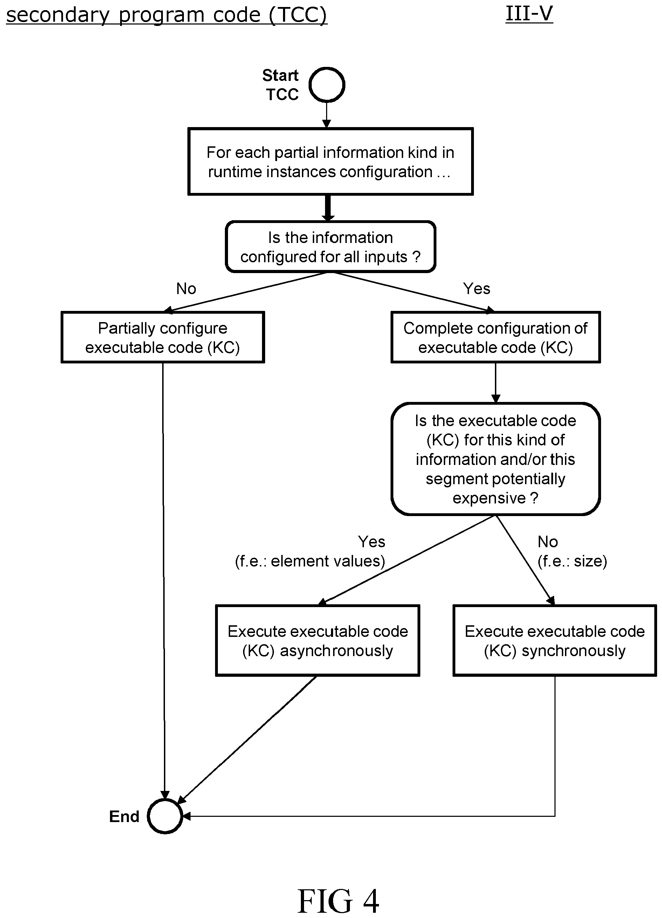

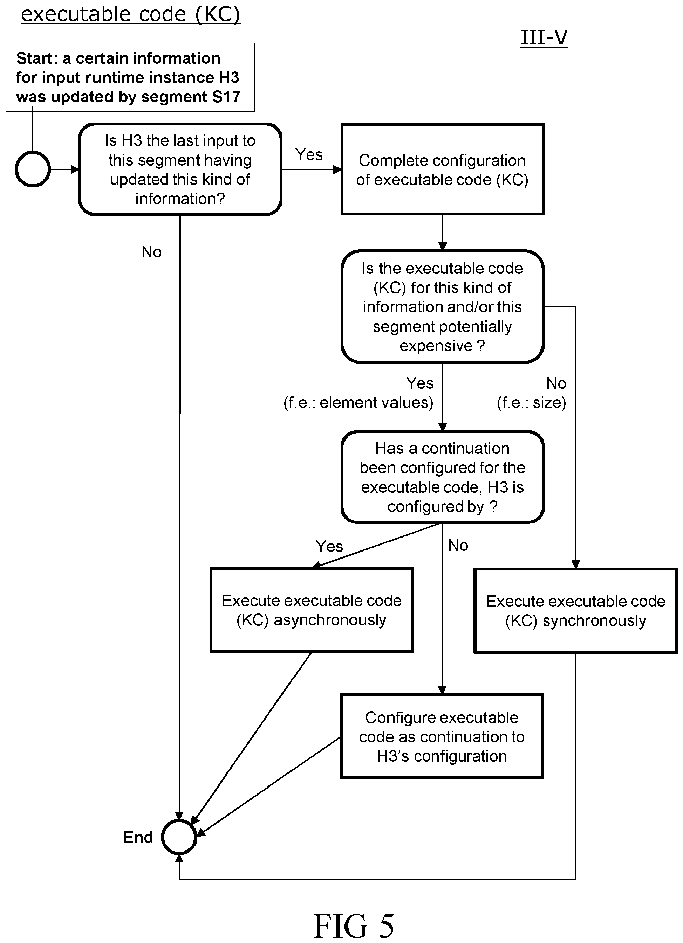

Figure 4 and Figure 5, which are explained in more detail below, demonstrate example implementations for making decisions about how to execute a certain part of the executable code (KC) and when. As such, figures 4, 5 refer to the processes of starting (III) executing the secondary program code (TCC), completing (IV) configuration of the respective executable code (KC), and executing (V) the respective executable code (KC) as explained above for methods 1000.

Referring again to Figure 1B and for the sake of this introductory example we assume the following situation or configuration: if during processing the TCC it is found that all inputs to the executable code, in particular to the code expressions (CE) calculating the size of an output runtime instance to the segment have their information configured (already), the TCC typically calculates the size information for the (partially configured) output runtime instance of the segment synchronously. In such a case, the executable code corresponding to the size information calculation is called by the TCC directly and the execution of the executable code is performed on the same subunit used for processing the TCC.

Here, the input array runtime instance A1 is assumed to be configured already. However, the code expression (CE), calculating the output size depends on the further input data, in particular the result of the runtime kernel (RK) execution for segment S1, which is still missing at this time. Hence, the code expression (CE) is only partially configured and prepared for later execution, when all input data becomes available.

Note, that in some embodiments the code expressions (CE) calculating a configuration information of an output of the segment, in particular a size configuration information of an output of the segment may be integrated or merged into other parts of the executable code (KC). Often, the size of an output is (also) calculated by code defined for the runtime kernel (RK), especially if the size configuration information of the output depends upon at least one element value of the runtime instance as input to the segment. Some embodiments may integrate, merge, or create size calculating code (for example based on AIMI of the array instructions) into the runtime kernel. Some define the code expressions as referring to the runtime instance as output, in particular to the size configuration information of the runtime instance as output, in particular after it was configured by the runtime kernel (RK).

Some other implementations may allow the runtime kernel to refer to or even invoke calls to the code expression (CE) to calculate a certain information, in particular a size of an output at runtime and during executing the runtime kernel (RK). Sometimes, when the size of an output to the segment depends on input element values all of the configuration information of the output may be calculated and stored by the runtime kernel (RK). Such kernels may afterwards signal / informs the code expressions of subsequent segments about changes / updates of the runtime instance configuration information (/ - kinds) directly, before signaling them about the update of the element values. Sometimes, multiple of such signals are merged into one.

Each array instruction may expose an individual semantic / behavior, resulting in a large number of potential combinations of individual configurations of executable code when combining multiple array operations into a segment. A skilled person will appreciate that the best configuration strategy / an efficient configuration of the executable code (KC) generated for each segment may be selected based on the array instructions / array operations comprised within and according to each array instruction supported by the language and the compiler or to introduce a segment border to separate unmatching instructions where appropriate.

For example, some array instructions require the update of only one information kind to complete the configuration of its runtime instance as output. One example is the transpose function to change the orientation of a matrix object. It (re-)configures the size (dimension order / lengths and stride) information only. All further configuration information may be kept and taken directly from the runtime instance as input to the instruction, including the element values and even the memory reference. Here, the runtime kernel can be configured to perform such copy, be configured as a NOP (no-operation), or even be omitted. Note, that this method works best in conjunction with "lazy copy on write" memory management for the runtime instances, for example using reference counting.

Or, as another example the sin() function, computing the sine of the element values of the input array runtime instance requires to modify the element values configuration information, but may take over, or even reuse the size information of the input instance. Here, the code expressions calculating the size of the output instance may be configured to perform such copy, be configured as a NOP, or even be omitted.

The further input data may refer to information (often additionally) required to compute the desired configuration information, or it may point to the source of such information. Often, further input data references an output of another executable code (KC) part, in particular of a runtime kernel (RK), often a temporary output or buffer or memory area used for calculating the element values without (yet) knowing the number of elements of the resulting output runtime instance, containing a size information of an output as result of executing the runtime kernel (RK). Which source is to be referenced by the further input data is specific to the array instruction and the specific implementation / design of the instruction as array operation by the compiler / transpiler. Sometimes, further input data refer to (array or scalar) input parameters of an array instruction, for example to an axis / dimension index, specifying the working direction of a certain array instruction, or a (user / compiler / environment) configuration setting. Often, the further input data may be omitted, and / or the corresponding information be integrated / merged into (an)other part(s) of the executable code (KC), for example as constant expression, literal or value.

Sometimes, when merging certain array instructions into a common segment introduces too large a complexity to be handled (by the compiler author or the execution framework), a segment border can be introduced to limit the complexity. The best (fastest or with lowest power consumption) execution results / the most efficient use of hardware resources will often be achieved by merging as many array operations (according to the array instructions) into a segment as possible, thus by eliminating as many intermediate temporary runtime instance results as possible. However, if (only) a segment border can enable support for a certain array instruction , such separation is almost always preferrable over forcing sequential, synchronous execution of the array instruction, especially when processing is performed on the main thread.

Correspondingly, if during processing the TCC or during configuring the executable code (KC) it is found that all input data to the runtime kernel (RK) have their configuration completely defined (already) the TCC typically starts executing the executable code (KC), in particular the runtime kernel (RK) for the output runtime instance of the segment asynchronously. Here, the execution of the executable code corresponding to the element values information calculation, in particular the runtime kernel (RK) is initiated by the TCC and the execution of the runtime kernel (RK) is performed on another subunit than is used for processing the TCC.

Note, that the initiation / scheduling of the runtime kernel happens only, when all input data / dependencies are already defined, accessible and available.

According to Figure 1B the only input array data structure to segment S1 is A. Here, we assume that A1 is the corresponding input runtime instance and that it is already completely configured. Accordingly, the runtime kernel (RK) is started asynchronously. The code expressions (CE) are configured to start the size calculation / the completion of the configuration of B1 when the kernel finished processing. Alternatively, the compiler might omit the code expressions (CE) as a dedicated code part and uses the runtime kernel (RK) for size calculations.

After the executable code KC was created, configured, executed and/or started, execution of segment S1's TCC may be completed and execution of the TCC for segment 2 may begin on the same thread.

Segment S2 receives the instance B1 of B, which was created by segment S1's TCC. At this point, the configuration of B1 is likely to be incomplete, still. Here, we assume, that B1 is partially configured: it lacks a defined size, a memory reference to an element buffer and the element values.

Segment S2's TCC creates and/or configures code expressions for this segment. It creates the runtime kernel for the array operations (sin), for the array input instance properties and for the PU's properties. Typically, such kernels are cached and later reused. Further, the TCC creates code expressions for determining the size of the output array instance C1. Due to the kind of array operations implemented by segment S2, the size of C1 does not depend on the element values of any input array. Hence, the setSize() code expression does not require to consider these element values.

Knowing the sizes of the input array instances is sufficient to calculate the size of the output array instance to the segment. Segment S2's code expression is capable of calculating the size of its output (the size of C1) even for a partially configured input array B1 - as long as the size of B1 is configured. Many implementations will make use of this fact by reacting to changes of individual categories of configuration to array instances. Here, the code expression may be executed when the size of the input array B1 changes / becomes defined - but not necessarily the element values. Compare this to the more complicated code expression for segment S1 above, where the code expression setSizeQ required a fully configured input A1 to run. Note, that the configuration of input(s) and their modifications that trigger an execution of an executable code (KC) is a property of the array instructions from which the array operations of the segment are derived, and therefore have to be known to the compiler, for example by means of AIMI (see below).

The code expression of segment S2 is configured by the segment's TCC to react to changes to the size of the input array instances A1 and B1. It is set-up to calculate the size of the output array instance C1 then.

The runtime kernel of segment S2 is configured by the segment's TCC to react to completion of the configuration of all input array instances A1 and B1. It calculates the element values for the output array instance produced: C1. Often, the kernel also allocates memory for the storage of the output element values, including the configuration of the memory reference configuration information of C1. Some implementations, however, perform the memory allocation for output(s) of the segment from other code parts of the segment, in particular from the TCC or from code expressions (CE) and after calculating / configuring the size of the output. While error handling may be simplified this way, the method is expected to perform best (with respect to execution time and/or power consumption) by allocating the memory as late as possible before storing runtime kernel result(s).

After the configuration of the executable code (KC) is completed (and assuming that configuration of B1 is still not completed), the execution of the TCC for segment S2 is complete and processing may continue with segment S3's TCC on the same thread. The code expression of segment S3 is created / reloaded / configured for reacting to changes to the size configuration of its input array instance: C1. It is configured to calculate the size of the output array instance C2 and to store the size information into the array instance C2.

The runtime kernel for segment S3 is created / reloaded / configured for calculating the element values of the output array instance C2, based on the input array instance C1, the array operation(s) of segment 3 and considering the properties of the processing unit. The runtime kernel for segment S3 is configured to react to the completion of the configuration of the input array instance C1. Afterwards, the execution of the TCC for segment S3 is completed, stage 1 is completed, and the processing may continue on the same thread with further instructions (not shown).

Note, that until this point no element values were necessarily calculated, yet.

We continue describing the processing happening on other threads. Such processing may (commonly) happen in parallel to the processing of the segment's TCC as described above. However, in this example and for the sake of clarity we assume that processing on other threads may only start after all three segments' TCC were completely executed. A skilled person will be aware that an implementation of the described methods requires all segments, runtime instances and their configurations as well as related structures and functionality to be thread-safe and prepared for changes to happen concurrently at arbitrary points in time during processing.

Since A is the only input array to segment S1 and since, in this example, A1 is already completely configured when processing of segment 1 begins, the runtime kernel starts processing immediately after the setup of the executable code was completed by segment S1's TCC and after the execution of the runtime kernel was initiated by the TCC on another thread.

The runtime kernel calculates the element values of B1. After the kernel is complete(d), the code expression setSize() begins executing, as it has been configured to respond to the completion of the kernel run (and of the configuration of its input array instances, but in this embodiment the only instance A1 was already completely configured).

Note, that the memory reference of the output array instance's element buffer is created by allocating memory for the output array instance on a memory accessible by the processing unit PU. Of course, for allocation of memory the size of the memory area has to be known. Hence, the size of the output array instance must be known before allocation is possible / feasible. Commonly, the executable code (KC) includes expressions / instructions for performing the allocation at runtime. Some implementations configure the memory reference by using code expressions in a similar way as for (and mostly after) the setSize() part. Other implementations configure the memory reference within the runtime kernel or after the kernel completed execution. Latter method is especially useful for such array operations, whose output size depends on input element values, in particular array operations comprising conditional expressions. Other implementations may calculate the values and the size and perform allocation all within the runtime kernel or by a code executed before and/or after the runtime kernel.

Sometimes, temporary storage, dynamic memory or data structures of variable length are used within a kernel, before the final size of the output runtime instance is known, and before allocation of the memory used as memory reference in the output array runtime instance. Other implementations may calculate and allocate a maximum size for the memory area according to the input and the array instruction / array operations within the runtime kernel and may only reference a part of the memory area if the size required for the output is smaller than the size of the allocated memory, for example by configuring the size information of the runtime instance as output accordingly.

The runtime kernel of segment S1 calculates the element values of B1 (sometimes using a temporary storage buffer or by performing multiple iterations over the input elements), allocates memory for the elements of B1, stores a reference to the memory into the configuration of B1. Or the code expression of segment S1 runs after the runtime kernel finished execution. It may compute and configure the size of B1.

When B1's size is stored, the configuration of B1 is changed. Recall that such change triggers execution of the code expressions of segment S2. Hence, corresponding code expressions are executed. Often, the code expressions (CE) for calculating the size of an output are executed on the same thread (synchronously). This choice is assumed in the following description. Sometimes and for certain array operations comprising expensive size calculation the code expression execution might be triggered on another thread. Often, this decision is implemented as a compiler switch.

The code expressions of segment S2 calculate the size of C1 and store this information into the configuration of C1. This change of the configuration, however, triggers the execution of the code expression (CE) for calculating the size of an output of segment S3. It calculates the size of the output array runtime instance C2 to the segment S3's TCC. Therefore, as soon as the size of B1 becomes determined the size(s) of all dependent array instances are computed and configured in a timely manner.

Note that such 'size forwarding' is important to ensure that as much information as possible is available to subsequent segments. Their executable codes (KC) may implement optimizations based on the size information of input runtime instances. For example code specializations may be used for special input sizes, like scalar or empty arrays. Or, some array expressions, for example involving constant arrays often only depend on the input size, hence may start executing as soon as the size is available. Further, on heterogeneous computing systems this method integrates well with the method described in WO 2018/197695A1, where device selection often relies on execution costs, based on the size of array runtime instances. Further, the earlier a configuration of executable code and/ or a preparation (for example a copy operation) of data is initiated or started (for example asynchronously or on a worker thread), the better chances are that latencies or delays associated with the preparation are hidden or decreased by other operations or tasks running (being performed) in parallel.

With the completion of executing the runtime kernel to segment S1 and all dependent (chained) code expressions, stage 2 of the execution of this example is completed as is also shown in Fig. 2A.

The runtime kernel of segment S2 is configured to start execution when all input array instances (not shown in the figure) are completely configured. The runtime kernel (RK) of segment S2 receives input array instances A1 and B1. As soon as B1 is completely configured (by segment S1's runtime kernel and/or code expressions), the runtime kernel of segment S2 may start execution. It calculates the element values of the output array instance C1 and, therefore, completes the configuration of C1. At this time, stage 3 is completed.

The runtime kernel instance of segment S3 starts execution when the configuration of its (only) input array instance C1 is completed. It calculates and stores the element values for the output array instance C2 and completes its configuration. At this point, stage 4 is completed.

Note, that commonly at least some instructions / tasks performed within the various stages described above may (automatically) run in parallel on a processing unit capable of executing multiple tasks /threads in parallel. This can be supported by configuring the runtime kernels and/or the code expressions to run asynchronously. Therefore, when a configuration change of an input array instance triggers execution of a code expression or of a runtime kernel, the corresponding code is scheduled to run on another thread / on a parallel compute resource / on another sub-unit instead of on the same thread / sub-unit.

In some cases it is sufficient to use a work stealing scheduling technique to distribute the work of asynchronously executed runtime kernels and/or code expressions onto multiple subunits.

The configuration of the memory reference of array instances is typically associated with allocation of a memory area for storing array instance element values of an output to the respective segment in runtime kernels. For optimal performance characteristics it is important to carefully consider the point in time when the allocation happens during processing of segments and of codes derived thereof.

In a simple design memory is allocated in the TCC part of a segment. This brings the advantage of a simple implementation of related parts supporting the allocation. For example, memory for arrays is often managed or allocated from a memory pool. With all allocations happening from the main thread (core#1) and in the TCC part, the memory pool's functionality undergoes fewer restrictions. For example, thread safety is not required if the main thread is the only source of memory allocation and memory deallocation.

However, when an allocation request cannot be completed (due to a large enough memory area not being found / available) the main thread must wait until memory from outstanding segments becomes available. Hence, limits on available memory impose a limit on the number of segments which can be prepared ahead of time by the main thread. The higher this number the more segments are considered and prepared. The more segments are considered (at the same time and ahead of processing / executing their runtime kernels) the more parallel potential / independent segments are identified and scheduled onto different threads, the more parallel computing resources / subunits may be utilized.

One especially efficient way to increase the number of prepared segments (hence, to increase the recognition of independent segments, thus to improve parallel execution) is to decrease the `life' time span of array instance element memory storage being allocated / reserved. In a more efficient design allocation is performed directly before a runtime kernel is about to be executed and/or on the same thread the runtime kernel is scheduled for. An expert in the field will appreciate the fact that allocating memory may still impose a blocking wait on the corresponding runtime kernel thread. However, due to the way segments are connected with each other this invention makes sure that no race condition may occur by blocking a runtime kernel thread before completion and no other segment / runtime kernel can exist, waiting for and depending on the output produced by the blocking runtime kernel and in turn blocking the blocked thread.

Typically, allocation of memory is performed from a memory pool or from a memory manager / virtual memory manager and as part of executing the executable code (KC), in particular within the runtime kernel code. Note that typically, the runtime kernel (RK) code is executed once all input runtime instance configuration information is complete and available to the executable code. Hence, all information required to determine an output runtime instance memory area size is also available at this point.

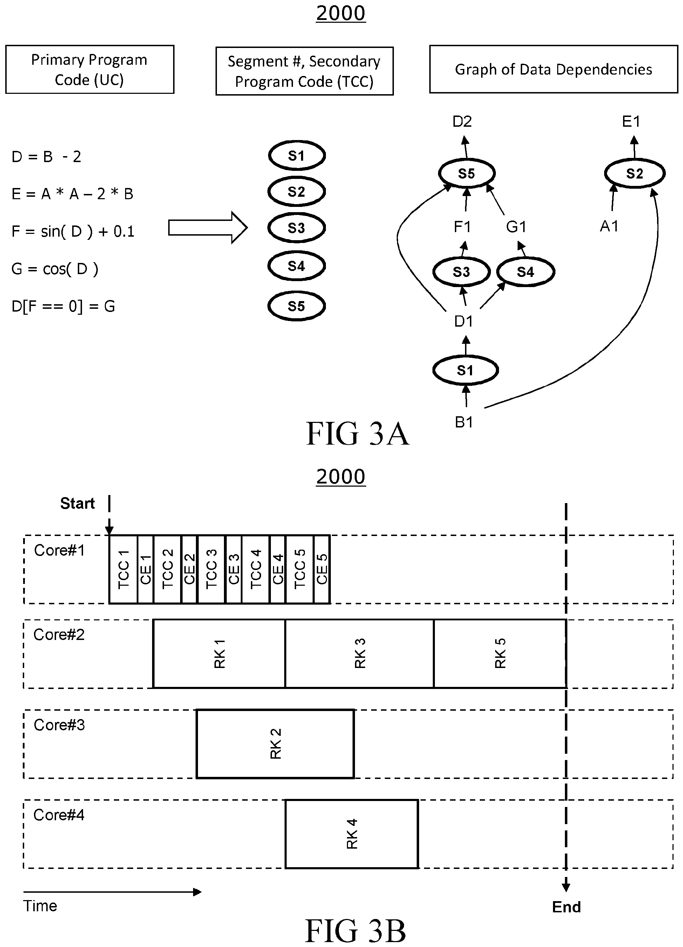

Figures 3A, 3B illustrate a method 2000 which is typically similar to method 1000 explained above. However, method 2000 refers to an exemplary primary user code UC with 5 lines of supported array expressions. Again, each line may be translated by a compiler / by a transpiler according to this disclosure into one corresponding segment S1 to S5 in the secondary program code TCC. The right column of Figure 3A shows the dependency graph according to these expressions.

Thick lined ellipses in the graph represent the segment's code. Inputs to the segment are marked by a name made of their respective array data structure as input to the corresponding array instruction, and a number indicating the array runtime instance index for this array data structure during an exemplary execution of the secondary program code.

The runtime instance B1 enters the segment S1, corresponding to the array instructions 'D = B - 2'. It results in a runtime instance D1 as output of segment S1. D1 is further used as input to segments S3, S4, and S5. Note, that segments S1, S3, S4, and S5 build one branch of a common dependency graph, segment S2 depends on B1 and builds another branch. Note further, that subsequent or earlier instructions / segments may existing and creating / receiving the results of the array instructions are not considered here for clarity.

Payload and/or workload associated by expressions within dependency graph sibling branches do not depend on each other's results, thus, can be executed in parallel or concurrently. Further, segments 3 and 4 exist in sibling branches, do not depend on each other, and can also be executed in parallel.

In the following we describe how the present disclosure allows making full use of the parallel potential of common array algorithms (like the one demonstrated), by scheduling independent segments onto parallel computing resources / subunits according to their locations within corresponding dependency graph(s).

The following description and Figure 3B intent to describe - among others - the scheduling of individual parts of the segments code. The parts of a segments being executed as part of the secondary program code are named "TCC", appending a number representing the segment index. Typically, all of TCC1 ... TCC5 are executed on the main thread. Similar names are used for identifying the executable parts of each segment: "CE" appended by the segment index represents the code expression (CE) of the corresponding segment. "RK" appended by the segment index represents the (configured) runtime kernel of the corresponding segment. For example: RK4 intends to reference the runtime kernel of segment 4.

When the TCC of segment 1 (TCC1) is executed on core #1 (as main thread) all input arrays to segment 1 are assumed to be already completely configured. The array instruction implemented into segment 1 allows to calculate the size of the output disregarding the element values. Hence, the code expression CE1 computing the size within the executable code (KC) is executed synchronously and on the main thread.

Further, TCC1 configures a runtime kernel. Again, since all input arrays are ready, the kernel is started on another thread. Often, a work stealing thread scheduler is used to select a free subunit and to enqueue the kernel.

While the kernel is still executing, TCC2 is processed. Again, all inputs are ready (completely configured), thus CE2 executes on the main thread and RK2 is enqueued to another thread (here: core#3). Note, how both segments' array instructions are now executed in parallel.

Continuing with TCC3, it is found that the size of all inputs is configured already. Note, that the size of D1 was configured (synchronously) by the main thread (even though that its values are not ready yet). Hence, again, CE3 runs on the main thread. The kernel for segment 3 is configured. Because values for D1 are not yet ready, the kernel is not started, yet. It will be started once configuration of D1 is completed. Until then, RK3 is not enqueued to any thread. It waits in the back (not shown) for being started/scheduled/enqueued. Similarly, the TCC of segment 4, TCC4 is executed, creating, configuring and starting CE4 on the main thread, and creating and configuring RK4 for asynchronous execution once the element values of D1 are completely configured.

Let's assume that in the meantime, segment S1 (RK1) finished execution. RK3 and RK4 were configured to receive signal from the completion of D1. In general and as is true for most concurrent operations, the order of completing tasks or runtime kernels on individual subunits is not determined and may change in arbitrary ways. Here, we assume that the signal arrived at the RK 3 first. Therefore, the kernel for segment S3, RK3 is configured as continuation to the RK1. Therefore, it is executed on the same thread as RK1.

At the same time all input to segment S4, D1 is also completely configured. RK 4 is the second runtime kernel receiving signal about completion of D1. Accordingly, RK4 is asynchronously executed, for example by using a work stealing thread scheduler. Here, it was enqueued to the subunit / thread core #4 and executed concurrently to RK3.

Therefore, while RK 3 uses the same thread as RK1, RK4 will be enqueued to another thread. It is obvious that this assignment is arbitrary and here, only depending on the order of the completion signals arriving at the respective runtime kernels.

In the meantime, the main thread processed TCC5 and CE5. While the size of the output of TCC5 is again known, RK5 must wait for the outputs of RK4 and RK3 (F1, G1 respectively). Thus, RK5 is configured to wait to be signaled by these runtime kernel outputs after their completion. It is assumed that RK3 - due to its higher workload - finishes later than RK4. However, this - of course - is not guaranteed. In a real scenario and if asynchronous resources are involved, it is likely or at least possible that either kernel may finish earlier. In this example, RK4 finished earlier than RK3 and RK5 is signaled about completion of its output runtime instance, G1. Hence, the output of segment 3, F1 becomes completed last. RK5 is signaled about the completed configuration of F1, which is the last input to RK5. Further, RK5 is the first signal sink for F1. Hence, RK5 is enqueued to the subunit, RK3 was executed on. See below for a detailed discussion of these scheduling decisions.

A typical implementation creates and sends a completion signal as part of the runtime kernel (RK).

Wrapping up the example of Figure 3A and 3B, the sequential array code was parallelized and distributed onto 4 cores / subunits. Large parts of the segments (additional) management code were executed in parallel to (optimized) payload parts / runtime kernels. Parallel potential between the array instructions were identified and made use of by efficiently distributing their payload / kernels to 3 worker threads. The method described often achieves close to optimal speed-up rates according to the parallel potential (see: Amdahls law) and to the sub-unit's availability.

To achieve lowest execution times and / or lowest power consumption the number of threads / tasks scheduled for parallel execution may not (significantly) exceed the number of independently executable segments at runtime. It will be obvious to an expert, that this number is related to the number of parallel executable branches in a dependency graph corresponding to the primary or secondary program code (UC / TCC). For example, in the exemplary dependency graph in Figure 3A segments S3 and S4 may execute concurrently. Segment S2 may be executed in parallel to any of the other segments, S1, S3, S4, S5.

However, to prevent from excessive thread utilization / allocation and from additional threading overhead, segments within a single branch of the dependency graph may (re)use the same thread for execution of their runtime kernels (or other asynchronous configuration tasks). To use new threads for scheduling and/or execution of executable code (CE), in particular for execution of runtime kernels (RK) is only required in certain cases / configurations / situations, which are identified and described in more detail below.

Figure 4 intends to describe an especially advantageous process leading to a decision for scheduling executable code (KC) from the secondary program part of a segment. Figure 4 shows exemplary steps to select to either synchronously or asynchronously execute the executable code created and/or configured by the secondary program code (TCC) of a segment. Or, depending on the state of configuration of input runtime instances to the segment, to only configure the executable code and to not perform execution (yet).

The decision process starts with executing the TCC of a segment. All information kinds configurable for all runtime instances are iterated. Here, we assume that the size and the element values are configurable. For each information kind (size, values) it is determined whether the specific kind of information is (already) configured for all input runtime instances received by the segment. If all instances are configured correspondingly, the executable code is executed by the segments TCC.

Some runtime instance configuration information is relatively efficient or simple to calculate. For example, to calculate the size of an output to the segment based on the size configurations of all inputs to the segment does often require an effort of O(m), where m is the number of inputs configured to the segment. Such information kind is often classified to be "not expensive" and configured to be executed synchronously and the execution is performed.

In contrast to that, the element values configuration information of an output (as often computed by the runtime kernel (RK)) requires at least an effort of O(n), with n being the number of elements in the output. Such information kind is often classified as "expensive". Hence, the corresponding executable code (KC) is configured to execute asynchronously and the execution is initiated. Note, that hereby, execution of a "segment chain" or set of segments, corresponding to the segments in a branch of an associated dependency graph is started and the newly assigned subunit / thread will typically be used to perform execution of further, typically even of all subsequent segments within this set.

If the current information kind is not (yet) configured for at least one input runtime instance the executable code (for the current information kind) is configured by the TCC of the segment (see: IV in Figure 1A).

Sometimes, this configuration happens only partially. In this case the configuration of the executable code will be completed once the corresponding information kind for the last runtime instance as input to the segment became updated or defined. Note, that such completion is typically performed by the thread / subunit executing the code causing the update and not by the main thread / subunit. See Figure 5 for an example.

A partial configuration allows optimizations to the executable code to consider the updated information. For example, the executable code could be specialized for at least some size information, for example for the number of dimensions or striding information.

After the current iteration for a specific information kind was processed and the corresponding decision and/or actions performed the TCC implementation proceeds with the next information kind or ends after the last information kind.

Figure 5 intends to describe an especially advantageous decision tree for scheduling executable code (KC) being informed / signaled about the completion of the configuration of one of its input runtime instances. In the figure exemplary runtime instance H3 and segment S17 are used to ease references to individual blocks. It is assumed that the current decision is performed by a code being part of the executable code of the current segment, in particular the executable code (KC) corresponding to the configuration information kind being updated for runtime instance H3. It is further assumed that the configuration information of H3 was updated by executable code associated with a segment S17 (not shown). Alternative embodiments may perform these decisions in other places / by other codes without affecting the general functioning of the present disclosure.

The decision starts with the update of the configuration information of H3. The executable code of the current segment corresponding to the configuration information kind (for example: code expression calculating a size or runtime kernel calculating element values) is called by the executable code (KC) of segment S17. If the currently updated information kind is missing or undefined for any other input to the current segment the update signal is recognized (for example by a counter, in particular a reference counter) and no further actions are required.

Otherwise, the configuration of the executable code corresponding to the current information kind is completed. If the executable code had been completely configured already this step may be skipped.

Next, a decision is made on how to execute the (completely configured) executable code. If the kind of configuration information is classified as "not expensive" (see above, Figure 4) the executable code is often executed synchronously, immediately, and/or by the current thread / subunit.

Otherwise, and if the kind of configuration information is classified as "expensive" it is determined if a continuation has been configured for the executable code of S17, having updated H3 (in the following: sender code). A continuation is a task or executable code to be executed after the current task or executable code finishes execution. A continuation may be configured by providing a method or function reference to the executing task or executable code. For example, an object instance used for signaling the current executable code about the completion of a configuration information of H3 may be configured by the current executable code as message object to inform the sender (S17) about the executable code reference to be executed (here: the 'self' or 'this' instance).

If it is found that no continuation has been configured for the sender code the current executable code is configured as continuation to the sender code. Otherwise, the current executable code is configured for asynchronous execution on another subunit /thread and the execution is initiated. It will be appreciated by a skilled person that using a continuation (instead of immediately executing the current executable code synchronously) changes the order of execution of the current and potentially of further executable codes (of further segments also receiving the updated information). A continuation enables signaling of such further segments in a timely manner and before the (expensive) computation of the current executable code is finished.

Note, that for each invocation (call) of the executable code (KC), only the current information kind is considered in this embodiment.

Some systems according to this method may utilize multiple main threads to execute multiple versions / instances / parts of the secondary program code. Often, programmers utilize parallelization tools provided by the runtime system / by the operating system of by the framework used to distribute algorithmic parts onto multiple computing cores in a multi-threading environment! system / framework. In this case each individual main thread typically accesses the same resources (thread pool, memory pool or memory manager) as for a single main thread and the method described herein applies similarly for each main thread.

An exemplary system configured according to the present disclosure often utilizes one thread or sub-unit of a multi-core processor system, the main thread, to execute the secondary program code TCC. In an advantageous situation the sequence of array instructions in the primary program code UC is configured in a way to lead to a sequence of segments in the secondary program code TCC of significant lengths and without interruptions by non-segment code. This situation is especially promising for achieving efficient resource utilization by this method. It often enables better resource utilization compared to other execution schemes.

While the main thread executes the secondary code TCC of adjacent segments, runtime instances as output are partially configured and executable code for completing the configuration is configured. The main thread then proceeds with the next segment in the sequence. Therefore, progress is made on the main thread in processing the sequence of segments, commonly without spending time in computing element values and/or without waiting for input array configuration information, in particular without waiting for either or both of input array size information and completed configuration information.

The configuration of runtime instances of array data structures is typically completed on other threads of the multi-core processor system. An expert in the field will appreciate the fact, that the overall workload of processing segments with array instances / data is distributed to parallel computing resources and both, the parallel potential of the algorithm and parallel capability of the processing unit are made efficient use of.

## Claims

1. A computer-implemented method (1000, 2000) comprising:
- receiving (I) a primary program code (UC) comprising a sequence of array instructions, each of the array instructions being configured to receive as input an array data structure (A, B, C, D, E, F, G) capable to store multiple elements of a respective common data type;
- generating (II), from the primary program code (UC), a secondary program code (TCC) executable on a processing unit (PU, CPU, GPU) comprising several sub-units (core#1-core#4), the secondary program code (TCC) comprising program segments (S1, S2, S3, S4, S5) each comprising a respective array operation, the array operations corresponding to the array instructions, each of the program segments (S1, S2, S3, S4, S5) being configured to:
• receive, as a respective runtime input, a partially configured runtime instance (A1, B1, C1) of a respective array data structure (A, B, C, D, E, F, G);
each of the program segments (S1, S2, S3, S4, S5) being configured to consider information from the respective partially configured runtime instance (A1, B1, C1) to:
• partially configure (PC) a runtime instance (B1, C1, C2) of an array data structure (B, C) as runtime output of the respective program segment (S1, S2, S3, S4, S5); and
• at least partially configure a respective executable code (KC) comprising the respective array operation, the executable code (KC) being configured to update a configuration of the runtime instance (B1, C1, C2) which was partially configured as runtime output of the respective program segment (S1, S2, S3, S4, S5); and
- starting (III) executing the secondary program code (TCC) on a first subunit (core#1) of the processing unit (PU, CPU, GPU); and
when a configuration of the runtime instance (A1, B1, C1), which was received as respective runtime input, is complete and/or updated:
- completing (IV) configuration of the respective executable code (KC), when the respective executable code (KC) is only partially configured; and
- executing (V) the respective executable code (KC) on the processing unit (PU, CPU, GPU).

2. The method of claim 1, wherein the configuration of the respective runtime instance (A1, B1, C1, C2) comprises a size information, a memory reference, and/or element values; wherein the configuration of the respective runtime instance (A1, B1, C1, C2) further comprises a storage location information, a storage layout information, and / or an element type information; wherein at least one of the size information, the memory reference, the storage layout, the element values, the storage location, and the element type information of the partially configured runtime instance (A1, B1, C1, C2) is undefined, uninitialized or missing; wherein the configuration of the runtime instance (B1, C1, C2) as runtime output is updated, completed and/or defined by the primary program code (UC), by the secondary program code (TCC), and/or in particular by the executable code (KC), and/or wherein the respective part of the configuration of a runtime instance as output is updated or defined by individual invocations of the executable code (KC) and/or the individual invocations execute individual parts of the executable code (KC), for example on distinct sub-units (core#1-core#4).

3. The method of claim 1 or 2, wherein the configuration of the respective executable code (KC) is completed (IV) and/or the respective executable code (KC) is executed (V) on the processing unit (PU, CPU, GPU) when the configuration of the respective partially configured runtime instance (A1, B1, C1, C2) is updated, in particular when at least one of the respective size information, the respective memory reference, the respective storage layout, and the respective element values is updated.

4. The method of any of the preceding claims, wherein the sub-units (core#1-core#4) are at least functionally identical; wherein the sub-units (core#1-core#4) have access to a shared memory for the processing unit (PU); wherein the processing unit (PU) is a multicore or manycore CPU or a CPU with a GPU; and / or wherein the respective sub-unit (core#1-core#4) is or is accessed or controlled by or corresponds to a kernel or user thread, a managed thread, a task, a fibre, or a process.

5. The method of any of the preceding claims, wherein the respective executable code (KC) comprises a runtime kernel (RK) which is executable on at least one, typically on each of the several sub-units (core#1-core#4), and/or wherein the runtime kernel (RK) is configured for using the array operation and the runtime instance as input to calculate, update or define the element values stored into the memory referenced by the runtime instance as output.

6. The method of any of the preceding claims, wherein completing configuration (IV) of the executable code (KC) comprises at least one of:
- generating a hash of the executable code (KC), storing or caching the executable code (KC) on a persistent storage, and loading and/or reusing a stored version of the executable code (KC);
- at least partially generating the runtime kernel (RK);
- finishing the runtime kernel (RK);
- optimizing the runtime kernel (RK) code for the size, the storage location and / or the storage layout information of the at least one runtime instance as input, and / or for properties of the processing unit (PU);
- configuring the runtime kernel (RK) for receiving and/or accessing at least part of the runtime instance (A1, B1, C1) as input and/or at least part of the runtime instance (B1, C1, C2) as output; and
- configuring the runtime kernel (RK) for starting execution of the runtime kernel (RK) on the processing unit (PU) when the element values of the runtime instance (A1, B1, C1) as input become completely configured.

7. The method of any of the preceding claims, wherein completing (IV) configuration of the executable code (KC) further comprises defining executable instructions or code expressions (CE) to be executed on the sub-unit (core#1-core#4) and performing at least one of: updating or defining at least part of the configuration, typically updating or defining at least a size information of the runtime instance as output, and/or updating or defining at least respective information of the runtime instance as output when the corresponding information was updated or defined for at least one, typically for all runtime instances as input, allocating memory on the processing unit (PU), and updating or defining the memory reference on a runtime instance as output.

8. The method of claim 7, wherein the code expressions (CE) are configured to be executed on the respective subunit used for executing the executable code causing respective information for the runtime instance as input to the respective program segment to become defined or updated.

9. The method of any of the preceding claims, wherein at partially configuring the respective executable code or completing (IV) the configuration of the respective executable code (KC) further comprises or is followed by executing the code expressions (CE) on the first subunit (core #1) if an information, in particular a size information of the runtime instance as input to the respective program segment is defined and configured and is available to the executable code (KC) at this time, and/or wherein completing the configuration of the executable code (KC) comprises or is followed by starting execution of the runtime kernel (RK) on a further subunit (core#2 - core#4) of the processing unit (PU) if the runtime instance as input to the respective program segment is completely configured and available to the runtime kernel at this time.

10. The method of any of the preceding claims, wherein generating the secondary program code (TCC) comprises inspecting and/or analyzing the primary program code (UC) or code derived thereof to extract data flow information and / or to analyze data dependencies, wherein at least one of the program segments (S1, S2, S3, S4, S5) is chained to an earlier program segment in the sequence of generated program segments and/or receive at least one output array data structure of the earlier program segment as input array data structure, wherein configuring of the executable code (KC) of a second program segment (S2) in a program segment chain comprises to configure a runtime instance (B1) as respective input to the second program segment (S2) so that changes to or updates of at least one part of its configuration, typically at least of a size and / or of a part comprising element values, cause the executable code (KC) of the second program segment (S2) of the program segment chain to start executing, wherein such execution is performed synchronously.

11. The method of any of the preceding claims, wherein the array instruction comprises meta information, AIMI, allowing for determining a configuration information, typically a size information of an output of the array instruction for a configuration information of the respective input array data structure (A, B, C), wherein the AIMI comprises information about further input data (FI) required to determine the configuration information of an output of the array instruction, the information about the further input data (FI) typically comprising a source of the further input data (FI), wherein the information about the further input data (FI) comprises or refers to an output of the respective array instruction and / or is used as input to the AIMI, and/or wherein executing the secondary program code (TCC) comprises:
- using at least one of the AIMI of the array instruction corresponding to the array operation of the program segment, the array operation of the program segment, the configuration information, in particular the size information of the respective runtime instance, the runtime instance (A1, B1, C1) and the information about further input data (FI) as input to at least partially configure the executable instructions or the code expressions (CE) to receive respective information and to determine and/or update the configuration information, in particular the size information of the respective runtime instance (B1, C1, C2) as output of the program segment,
the AIMI typically comprising a size information, an element type information, and/or a layout information for the respective array operation, the size information typically comprising and/or referring to at least one of a number of dimensions of the respective runtime instance (A1-C2), a length of at least one of the dimensions of the respective runtime instance (A1-C2), a location information of the respective runtime instance (A1-C2), and a stride information of at least one of the dimensions of the respective runtime instance (A1-C2).

12. The method of any of the preceding claims, wherein partially configure (PC) the runtime instance (B1, C1, C2) of an array data structure (B, C) as runtime output of the respective program segment (S1, S2, S3, S4, S5) comprises at least one of:
- allocate and / or instantiate a runtime instance (B1, C1, C2);
- determine a respective runtime output size information of the runtime output of the respective program segment, typically using the AIMI and a runtime size information of the runtime input of the respective program segment (S1, S2, S3); and
- allocating memory for the respective runtime output of the respective program segment (S1, S2, S3, S4, S5).

13. The method of any of the preceding claims, wherein the primary program code (UC) is a user code typically written in a domain specific language and/or embedded in a host language such a C#, wherein the respective program segment (S1, S2, S3, S4, S5) is generated as host language code or as an intermediate representation, in particular a byte code representation, wherein the secondary program code (TCC) is compiled by a JIT-compiler, and/or wherein the respective executable code (KC) and/or the respective runtime kernel (RK) is at least partially generated by the JIT-compiler.

14. The method of any of the preceding claims, wherein generating the secondary program code (TCC) comprises at least one of:
- at least substantially maintaining a program flow of the primary program code (UC);
- replacing the sequence of array instructions by a sequence of program segments (S1, S2), typically using a transpiler, each of the program segments comprising at least one, typically multiple array operations, each array operation typically corresponding to one of the array instructions;
- generating a typically device-specific runtime kernel for each program segment (S1, S2) implementing the respective array operation, typically using a compiler;
- analyzing the primary program code and/or the secondary program code, in particular the sequence of program segments and/or generating an abstract syntax tree (AST) for the respective program code;
- analyzing data dependencies existing between array instructions determined by the primary program code or between array operations determined for the sequence of program segments;
- generating a dependency graph for at least some of the array instructions and/or array operations from the respective program code; and
- creating and configuring a respective program segment for synchronous execution, if, based on the dependency graph the respective program segment would not profit from parallel execution, in particular if the dependency graph containing the array instructions corresponding to the array operations in the respective program segment comprises exactly one branch, and wherein executing the respective program segment synchronously comprises to execute the executable code (KC), in particular the runtime kernel (RK) on the first sub-unit (core#1), in particular in the first thread.

15. A computer program product and/or a computer-readable medium comprising instructions which, when executed by a computer, cause the computer to carry out the method of any of the preceding claims.
